# EUROPÄISCHE PATENTSCHRIFT

(11) **EP 1 588 043 B1**
(45) Veröffentlichungstag und Bekanntmachung des Hinweises auf die Patenterteilung: **11.10.2006**
(21) Anmeldenummer: 04705374.9
(22) Anmeldetag: 27.01.2004
(51) Int. Cl.: F02M 27/08, F02M 37/00

(54) **VERFAHREN UND VORRICHTUNG ZUM BETRIEB EINES DIESELMOTORS MIT EINEM KRAFTSTOFF, DER PFLANZENÖLE ODER RECYCELTE PFLANZENÖLE UMFASST**
METHOD AND DEVICE FOR OPERATING A DIESEL MOTOR USING A FUEL THAT COMPRISES VEGETABLE OILS OR RECYCLED VEGETABLE OILS
PROCEDE ET DISPOSITIF POUR FAIRE FONCTIONNER UN MOTEUR DIESEL AU MOYEN D'UN CARBURANT COMPRENANT DES HUILES VEGETALES OU DES HUILES VEGETALES RECYCLEES

(30) Priorität: 28.01.2003 DE 10303139
(43) Veröffentlichungstag der Anmeldung: 26.10.2005
(73) Patentinhaber: Rudolph, Dietbert, 37574 Einbeck-Wenzen (DE); Rudolph, Stepahn Andre, 37574 Einbeck-Wenzen (DE); Rudolph, Patrick, 37574 Einbeck-Wenzen (DE); Von Flemming, Tanja, 31061 Alfred (DE); Wenzel, Dirk, 31157 Sarstedt (DE)
(72) Erfinder: RUDOLPH, Stepahn, Andre, 37574 Einbeck-Wenzen (DE); RUDOLPH, Peter, Rene, 18299 Laage (DE)
(74) Vertreter: Körner, Peter
(86) Internationale Anmeldenummer: PCT/DE2004/000120
(87) Internationale Veröffentlichungsnummer: WO 2004/067946

(56) Entgegenhaltungen:
- WO-A-02/068565
- GB-A- 1 150 306
- GB-A- 2 185 783
- SU-A- 1 206 130
- SU-A- 1 255 460
- SU-A- 1 262 083
- US-A- 2 732 835
- US-A- 4 227 817
- US-A- 4 463 708

## Beschreibung

Die Erfindung betrifft ein Verfahren und eine Vorrichtung zum Betrieb eines Dieselmotors mit einem Kraftstoff, der Pflanzenöle oder recycelte Pflanzenöle umfasst.

Die Nutzung von Pflanzenölen oder recycelten Pflanzenöle in Dieselmotoren wird u. a. dadurch erschwert, dass diese Öle eine stark temperaturabhängige Viskosität besitzen, die bei niedrigen Temperaturen sehr viel höher als bei Dieselkraftstoff ist.

Herkömmliche Umrüstungen von Dieselmotoren für den Betrieb mit Pflanzenölen tragen der Tatsache, dass sich derartige Öle kaum als Kraftstoff nutzen lassen, dadurch Rechnung, dass die Motoren mit Diesel angefahren und erst dann auf Pflanzenöle als Kraftstoff umgeschaltet werden, wenn der Motor und die Einspritzanlage die Betriebstemperatur erreicht haben. Um dies zu erreichen, muss der Motor dann entsprechend auch eine hinreichend lange Zeit vor dem Ausschalten wieder auf Dieselkraftstoff umgestellt werden (z.B. Umrüstungen nach Georg Lohmann oder nach Kraft). Dies erfordert neben dem Kraftstofftank für Pflanzenöl einen weiteren Tank für Dieselkraftstoff und bringt insbesondere die Unbequemlichkeit mit sich, jedes Mal, wenn der Motor für längere Zeit ausgeschaltet werden soll, zuverlässig wieder auf Dieselkraftstoff umzustellen.

Es ist bekannt, dass ein Grund für die mangelnde Eignung von Pflanzenölen als Kraftstoff die hohe Viskosität von Pflanzenölen ist. Ein weiteres Problem, das bei der Verwendung von Pflanzenölen in Dieselmotoren auftaucht, und ebenfalls mit der hohen Viskosität in Zusammenhang steht, besteht darin, dass Pflanzenöle sehr leicht Gase adsorbieren oder in Bläschenform einlagern, die schwer entweichen. Die Öle weisen dann eine gewisse Kompressibilität auf, die sich im Betrieb der Einspritzanlage störend auswirken kann, z.B. durch Auftreten von Kavitation und die weiterhin auch bei der Einspritzung Probleme bereiten kann. Diese Probleme werden durch herkömmliche Verfahren gar nicht oder nur unzureichend gelöst.

Daraus ergeben sich verschiedene Nachteile, die sich vor allem im Langzeitbetrieb bemerkbar machen und deren Ursachen oft nicht richtig erkannt werden. Dies führt z.B. zu der Beobachtung, dass der Betrieb mit Pflanzenölen sich "auf die Dauer" nicht lohne. Diese Aussage findet ihre Begründung in folgendem:

Kavitationsschäden in der Einspritzpumpe werden i.a. nicht als solche erkannt und führen erst nach relativ langer Betriebszeit zu merklichen Schäden. Mangelhafte Einspritzung kann unvollständige Verbrennung zur Folge haben und daraus können sich Ablagerungen an Kolben und Zylindern ergeben.

Auch kann es zu einem erhöhten Kraftstoffeintrag ins Motoröl kommen. Diese Ereignisse führen ebenfalls erst nach längerer Betriebsdauer zu Schäden.

Der Erfindung liegt die Aufgabe zugrunde, ein Verfahren und eine Vorrichtung zu schaffen, die einen Betrieb eines Dieselmotors mit einem Kraftstoff, der Pflanzenöle oder recycelte Pflanzenöle umfasst, ohne Einschränkungen ermöglichen.

Diese Aufgabe wird bei einem Verfahren nach dem Oberbegriff des Anspruchs 1 durch die kennzeichnenden Merkmale dieses Anspruchs und bei einer Vorrichtung nach dem Oberbegriff des Anspruchs 10 durch die Merkmale jenes Anspruchs gelöst.

Weiterbildungen und vorteilhafte Ausgestaltungen der Erfindung sind in den jeweiligen Unteransprüchen angegeben.

Durch die von der Einspritzpumpe unabhängige Druckpumpe wird der Kraftstoff zunächst vom Tank über als druckbeständige Faserfilter ausgebildete Kraftstofffilter in einen Vorratsbehälter überführt.

Durch die Ausbildung der Kraftstofffilter als druckbeständige Faserfilter können die aufgrund der höheren Viskosität von Pflanzenölen höheren Drücke ohne Beschädigung der Kraftstofffilter aufgenommen werden. Dies gilt besonders für niedrige Temperaturen.

Durch die Ultraschallbehandlung wird der Kraftstoff, der aus dem Vorratsgefäß der Einspritzpumpe zur Verfügung gestellt wird, inkompressibel und ergibt unter allen in der Praxis auftretenden Betriebsbedingungen ein einwandfreies Einspritzbild. Mangelhafte Einspritzung kann nämlich unvollständige Verbrennung zur Folge haben und daraus können sich Ablagerungen an Kolben und Zylindern ergeben sowie ein erhöhter Eintrag von Kraftstoff ins Motoröl. Dies führt u. U. erst nach längerer Betriebsdauer zu Schäden.

Pflanzenöle können sehr leicht Gase adsorbieren, binden oder in Bläschenform einlagern, die schwer entweichen. Diese Eigenschaft steht mit der hohen Viskosität in Zusammenhang. Die Öle weisen dann eine gewisse Kompressibilität auf, die sich im Betrieb der Einsspritzpumpe störend auswirken kann, z. B. durch Auftreten von Kavitation und die weiterhin auch bei der Einspritzung Probleme bereiten kann. Diese Probleme werden durch herkömmliche Verfahren gar nicht oder nur unzureichend gelöst.

Nach den bisherigen vorläufigen Erkenntnissen findet durch die Ultraschallbehandlung eine teilweise Entgasung statt. Ferner werden die verbleibenden Gase durch Zertrümmerung größerer Blasen in die Form so kleiner Bläschen gebracht, dass aufgrund der Oberflächenspannung der Bläschen bei den herrschenden Drücken und Druckänderungen im System weder Kompressibilität des Kraftstoffs noch Kavitation an Systemteilen auftritt. Eine vollständige Entgasung ist aber nicht notwendig, z.B. reicht eine hinreichende Zertrümmerung vorhandener Bläschen aus.

GB 1 150 306 A offenbart eine Vorrichtung bzw. ein Verfahren zum Betrieb eines Dieselmotors wobei der Kraftstoff in einem Kreis in einer Ultraschalleinrichtung (10) behandelt wird, wobei von der Einspritzpumpe zurückgeführter Kraftstoff nicht in den Tank sondern in die Ultraschalleinrichtung geleitet wird.
Auch SU 1 262 083 A zeigt eine Vorrichtung dieser Art, bei weicher ebenfalls eine Rückfuhrleitung gezeigt ist, die nicht in die Ultraschalleinrichtung, sondern in den Tank führt.

Bei fehlerfreier Einspritzung und Verwendung von Pflanzenölen erfolgt die Verbrennung gleichmäßiger und über einen längeren Zeitraum als bei der Verwendung von Dieselkraftstoff. Dies führt zu einem deutlich ruhigeren Lauf der Motoren und damit zu einer geringeren Belastung und einem geringeren Verschleiß.

Dadurch, dass der Rücklauf der Einspritzpumpe, anstatt, wie üblich, in den Tank, hier in den Vorratsbehälter zurückgeführt wird, wird die Entgasung durch das mehrfache Umpumpen noch unterstützt und eine erneute Filterung vermieden, wodurch der Kraftstofffilter entlastet wird.

Vorzugsweise wird der Kraftstoff durch Faserfilter aus Glasfasern und/oder Kunststofffasern gefiltert.

Dadurch kann ein bei herkömmlichen Papierfiltern beobachtetes Verkleben verhindert werden, wodurch der für eine ausreichende Kraftstoffversorgung nötige Volumenstrom gewährleistet wird.

Vorzugsweise wird ein Kraftstoffpegel im Vorratsbehälter über eine Regelung der Druckpumpe zwischen einem vorgegebenen Minimalpegel und Maximalpegel aufrechterhalten wird.

Auf diese Weise wird erreicht, dass die Einspritzpumpe stets mit Kraftstoff versorgt wird, der sie mehrfach durchlaufen hat.

Ferner kann vorgesehen sein, dass der Kraftstoff bei Erreichen eines vorgegebenen Grenzdruckes am Kraftstofffilter durch ein Überdruckventil über einen Rücklauf in den Tank geleitet wird.

Falls die elektronische Regelung der Kraftstoffpumpe ausfällt, wird so verhindert, dass die Filter am Ende ihrer Lebensdauer einen gefährlich hohen Druck aufbauen. Dies könnte sonst zu einer Zerstörung führen mit der Folge, dass ungefilterter Kraftstoff in den Vorratsbehälter und die Einspritzdüsen gelangt.

Gemäß einer Weiterbildung kann ein Additiv in den Vorratsbehälter eingeleitet werden.

Insbesondere im Winter bei sehr niedrigen Temperaturen kann es sinnvoll sein, dem Kraftstoff ein Additiv zuzufügen, das das Kaltstarverhalten verbessert und in einem gewissen Maß auch das Stocken (Festwerden) des als Kraftstoff verwendeten Pflanzenöls vermeidet. Da bei dem beschriebenen System auch mit kaltem Öl gefahren werden kann, lässt sich eine solche Maßnahme nur auf die erste Startphase beschränken. Dazu reicht es aus, dem Kraftstoff im Vorratsbehälter einige Milliliter eines geeigneten Additivs unmittelbar (d.h. einige Sekunden) vor dem Abstellen des Motors hinzuzufügen, damit das Additiv dann bei einem späteren Neustart vorhanden ist.

Weiterhin kann vorgesehen sein, dass die Einspritzdüsen und der Kraftstoff durch eine mit den Einspritzdüsen gekoppelte induktive Wirbelstromheizung vor und während des Starts des Dieselmotors beheizt werden.

Eine Pulsbreitenregelung sorgt für eine schnelle Erreichung und Einhaltung der optimalen Temperatur.

Kalte hochviskose Pflanzenöle können von den Einspritzdüsen eines Dieselmotors nicht so optimal vernebelt werden, dass ein einwandfreies Zünden gewährleistet ist. Es ist zwar an sich bekannt, Heizungen zu verwenden, um die verwendeten Pflanzenöle in einem Temperaturbereich zu halten, der eine hinreichend niedrige Viskosität ergibt, so dass der Kraftstoff einwandfrei vernebelt werden kann. Diese Heizungen wirken aber auf den vor der Einspritzpumpe befindlichen Kraftstoff ein. Sie sind daher wesentlich träger und benötigen mehr Energie, als von der Starterbatterie vorgehalten werden kann.

Der übliche Ausweg besteht darin, den Motor mit Dieselkraftstoff zu starten und ggfs. auch den Pflanzenölvorrat aufzuheizen. Um dies auch beim nächsten Start wiederholen zu können, muss hinreichend lange vor längeren Fahrpausen wieder auf Dieselkraftstoff umgeschaltet werden können. Hierzu ist ein zweiter Tank für Diesel notwendig. Dieses Verfahren ist umständlich und sehr unbequem.

Durch das hier beschriebene Verfahren werden diese Nachteile vollständig vermieden. Das Verfahren erlaubt es auch, bei allen in der Praxis vorkommenden Temperaturen direkt mit Pflanzenölen zu starten, so dass ein Zweitanksystem nicht benötigt wird.

Gemäß einer Weiterbildung kann bei elektronisch geregelten Einspritzsystemen das Signal eines zur Regelung des Einspritzzeitpunktes verwendeten Sensors, insbesondere eines Nadelhubsensors, durch eine schnelle Elektronik verstärkt und definiert verzögert and das elektronisch geregelte Einspritzsystem übermittelt werden.

In modernen Dieselmotoren werden die Betriebsparameter über eine sog. EDC (electronic diesel control) überwacht und geregelt. Insbesondere wird über einen sog. Nadelhubsensor der tatsächliche Einspritzzeitpunkt gemeldet und mit der für den vorliegenden Betriebsmodus optimalen Wert, der i. a. in einem Kennlinienfeld in einem Eprom gespeichert ist, verglichen. Weichen diese Werte voneinander ab, wird eine Korrektur des Einspritzzeitpunktes vorgenommen. Durch die höhere Viskosität von Pflanzenölen liegt der optimale Einspritzzeitpunkt allerdings, insbesondere bei niedrigen Drehzahlen, vor dem beim Betrieb mit Dieselkraftstoff.

Der Nadelhubsensor arbeitet induktiv, d. h. er reagiert auf Beschleunigungen. Schon beim Betrieb mit Dieselkraftstoff sind die Signale insbesondere bei niedrigen Drehzahlen so schwach, dass nicht in jeder Arbeitsperiode ein von der EDC auswertbares Signal vorliegt. Durch die mit der höheren Viskosität von Pflanzenölen verbundene stärkere Dämpfung des Nadelhubsensors wird nun, wiederum bevorzugt bei niedrigen Drehzahlen, dies Signal noch weiter abgeschwächt.

Um daraus resultierende schlechtere Laufeigenschaften zu korrigieren, werden die Signale des Nadelhubsensors mit Hilfe einer geeigneten Verstärkerelektronik, die es auch gestattet, dem Signal eine bestimmte Verzögerung zu geben, aufbereitet der EDC zur Verfügung zu stellen. Die Verzögerung kann dabei entweder von Hand oder automatisch, z. B. über eine Viskositätsmessung, einstellbar sein um damit den Motorlauf auf den Betrieb mit Dieselkraftstoff oder verschiedenen Pflanzenölen oder Mischungen aus Dieselkraftstoff und verschiedenen Pflanzenölen zu optimieren.

Vorzugsweise bezieht die Elektronik ihre Stromversorgung aus dem Signal des Nadelhubsensors.

Durch die Wahl geeigneter elektronischer Bauelemente kann man die Stromversorgung für die beschriebene Elektronik direkt aus dem Signal des Nadelhubsensors gewinnen. Dies erleichtert den Einbau und vermeidet mögliche Fehler beim Einbau, die durch Fremdspannungen ggfs. zur Beeinträchtigung der Funktion der EDC führen können.

Bei Ausgestaltung der Vorrichtung nach der Erfindung kann die Druckpumpe als Zahnradpumpe ausgebildet und durch einen elektronisch geregelten Elektromotor antreibbar sein.

Hierdurch können die nötigen Drücke erreicht werden um Kraftstoff durch den Kraftstofffilter zu drücken. Um allerdings extrem hohe Drücke zu vermeiden, die entstehen können, sobald der Kraftstofffilter am Ende seiner Lebenszeit entsprechend beladen ist, ist eine elektronische Regelung des antreibenden Elektromotors notwendig. Die Regelung, die z. B. die Stromaufnahme des Antriebsmotors oder eine Größe aus dem Differenzdruck über dem Kraftstofffilter auswertet, kann außerdem einen rechtzeitigen Hinweis zum Filterwechsel ausgeben und/oder dafür sorgen, dass die Kraftstoffförderung hinreichend früh unterbrochen wird, bevor durch den hohen Differenzdruck die Filtermatte Schaden nimmt und dann der Einspritzpumpe ungefilterter Kraftstoff zugeführt würde.

Mit der Druckpumpe kann eine Regelung verbunden sein, mittels der ein Kraftstoffpegel im Vorratsbehälter zwischen einem vorgegebenen Minimalpegel und Maximalpegel aufrechterhaltbar ist.

Da die Kraftstoffpumpe oder Einspritzpumpe stets mehr Kraftstoff fördern muss, als dem jeweiligen Verbrauch entspricht, um Kühlung, Schmierung und Druckaufbau zu gewährleisten, sorgt üblicherweise ein Rücklauf dafür, dass zuviel geförderter Kraftstoff in den Tank zurückläuft. Bei der Erfindung ist dies jedoch so abgeändert, dass in Strömungsrichtung hinter dem Kraftstofffilter ein kleiner Vorratsbehälter angebracht ist, den die Kraftstoffpumpe bis zu einem bestimmten Pegel elektronisch geregelt auffüllt. Aus diesem Behälter wird die Einspritzpumpe mit Kraftstoff versorgt und der Rücklauf wird ebenfalls in diesen Behälter geführt. Es wird so erreicht dass der bereits gefilterte Kraftstoff unmittelbar zur Versorgung der Einspritzpumpe zur Verfügung steht und nicht wieder mit ungefiltertem Kraftstoff vermischt und erneut gefiltert werden muss. Erst wenn der Kraftstoffpegel auf einen vorgegebenen Minimalstand abgesunken ist, wird die Förderung wieder eingeschaltet. Diese Anordnung hat den weiteren Vorteil, dass die Kraftstoffpumpe nur den wirklichen Kraftstoffbedarf pumpen muss und nicht so groß ausgelegt sein muss, dass sie den gesamten Volumenstrom durch die Einspritzpumpe bewältigen kann.

Die Ultraschallbehandlungsvorrichtung kann einen induktiven, piezoelektrischen oder magnetostriktiven Ultraschallgeber am oder im Gehäuse des Vorratsbehälters umfassen.

Der Ultraschallgeber wird dabei hinreichend weit unterhalb der Kraftstoffoberfläche angebracht, so dass starke Bewegungen der Oberfläche, etwa durch Resonanzen und/oder stehende Wellen, vermieden werden, denn diese können leicht zu einem unerwünschten Gaseintrag führen, der den gewünschten Effekt in sein Gegenteil verkehrt. In der Praxis hat sich ein magnetostriktiver Ultraschallgeber geeigneter als ein piezoelektrischer Ultraschallgeber erwiesen.

Gemäß einer Weiterbildung ist vor und während des Starts des Dieselmotors eine induktive Heizung mit den Einspritzdüsen koppelbar.

Durch gezielte Beheizung der Einspritzdüsen wird mit geringem Frerndenergiebedarf und geringer Trägheit der in die Zylinder eingespritzte Kraftstoff sowie vorgewärmt, dass er ausreichend vernebelt werden kann und ein einwandfreier Kaltstart bereits mit Pflanzenölen möglich ist, so dass auf einen zusätzlichen Dieselbetrieb verzichtet werden kann.

Vorzugsweise ist die Heizung pulsbreitengeregelt.

Zur Realisierung der induktiven Heizung der Einspritzdüsen sind Spulen um die Einspritzdüsen gelegt. Die Spulen sind als bifilare Doppelspulen ausgelegt.

Es hat sich gezeigt, dass eine Beheizung der Einspritzdüsen besonders wirksam mit Hilfe einer induktiven Hochfrequenzheizung (ca. 10 KHz) mit Pulsbreitenregelung möglich ist. Dabei kann erreicht werden, dass über eine Resonanzeinkopplung mit kurzeitig sehr hohen gepulsten Strömen mit einer Gesamtleistung von ca. 2 kWs (Kilowattsekunden) die notwendige Heizleistung aufgebracht werden kann, um einen einwandfreien Start zu gewährleisten. Der Starterbatterie werden dadurch nur ca. 5 Ah entzogen. Es hat sich in der Praxis als für einen weichen Motorlauf u.U. vorteilhaft erwiesen, die induktive Heizung mit deutlich reduzierter Leistung (ca. 10 bis 150 Watt) im Dauerbetrieb weiterlaufen zu lassen.

Nachfolgend wird die Erfindung anhand einer Zeichnung erläutert. In dieser zeigen:
Fig. 1 ein Diagramm zur Darstellung der kinematischen Viskosität (Viskosität bezogen auf die Dichte) einiger Pflanzenöle im Vergleich zu Dieselkraftstoff,
Fig. 2 eine Prinzipskizze einer erfindungsgemäßen Vorrichtung zur Kraftstoffaufbereitung und
Fig. 3 als Detail aus Fig. 2 einen Vorratsbehälter.

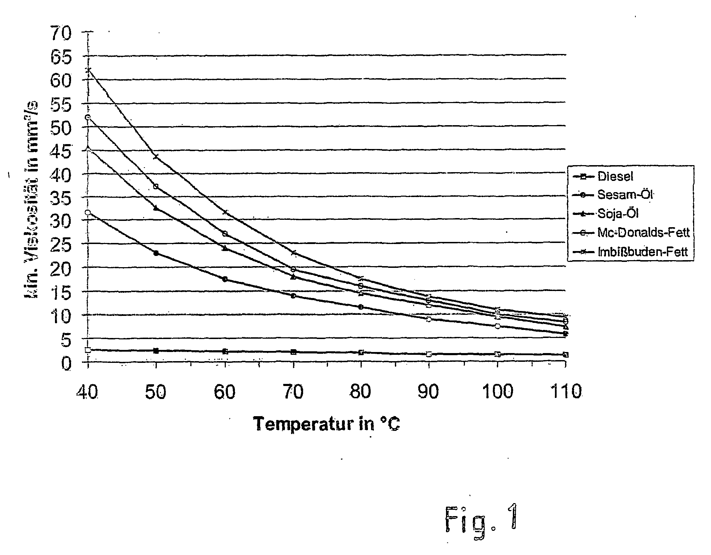

Fig. 1 zeigt ein Diagramm zur Darstellung der kinematischen Viskosität, d. h. der Viskosität bezogen auf die Dichte, einiger Pflanzenöle im Vergleich zu Dieselkraftstoff. Während die Viskosität von Dieselkraftstoff auch bei niedrigen Temperaturen sehr gering ist, weisen Pflanzenöle bei niedrigen Temperaturen eine um mindestens den Faktor 10 höhere Viskosität auf. Dies verdeutlicht die mangelnde Eignung als Ersatz für Dieselkraftstoff, wenn keine besonderen Maßnahmen für eine Kraftstoffaufbereitung getroffen werden. Insbesondere lassen die Viskositäten der Pflanzenöle bereits erahnen, dass besondere Problemen beim Kaltstart ausschließlich mit Pflanzenölen zu erwarten sind.

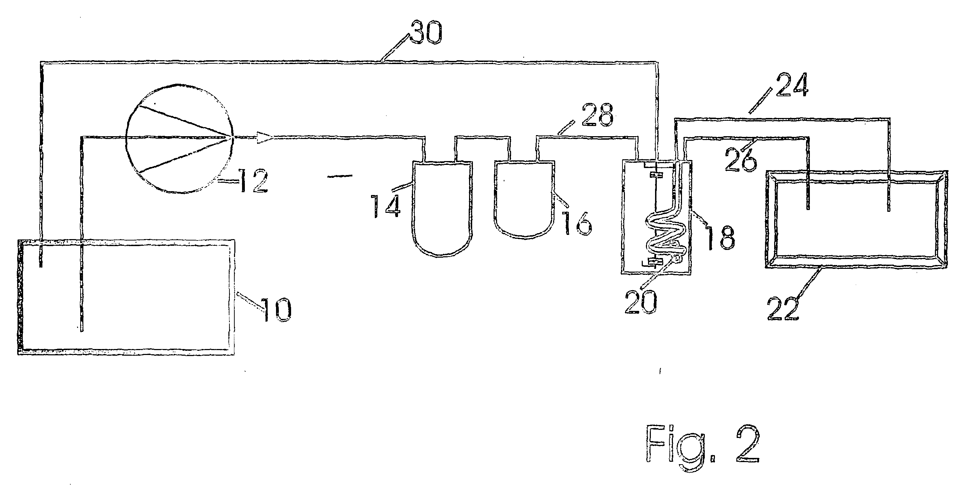

Fig. 2 zeigt eine Prinzipskizze einer erfindungsgemäßen Vorrichtung zur Kraftstoffaufbereitung für den Betrieb eines Dieselmotors mit Pflanzenölen.

Da die erfindungsgemäße Vorrichtung einen Betrieb ausschließlich mit Pflanzenölen ohne zusätzlichen Dieselkraftstoff ermöglicht, ist nur ein einziger Tank 10 nötig. Von dem Tank 10 wird der Kraftstoff über eine als Zahnradpumpe ausgebildete Druckpumpe 12 angesaugt und durch einen Vorfilter 14 sowie einen als Glasfaserfilter ausgebildeten Kraftstofffilter 16 gedrückt und über eine Vorlaufleitung 28 in einen Vorratsbehälter 18 überführt. Der Vorratsbehälter 18 umfasst ein wesentlich kleineres Volumen als der Tank 10.

Im Gegensatz zu für Dieselkraftstoff üblichen Papierfiltern, die bei Verwendung von Pflanzenölen zum Verkleben neigen, lässt der Glasfaserfilter 16 bis zur Erreichung seiner Lebensdauer den Kraftstoff passieren.

Im Vorratsbehälter 18 ist eine Ultraschallbehandlungsvorrichtung 20 angeordnet, die zur Entgasung des Kraftstoffes und zur Zertrümmerung verbleibender Gasblasen dient. Eine dem Vorratsbehälter 18 nachgeordnete Einspritzpumpe 22 entnimmt über eine Vorlaufleitung 24 Kraftstoff aus dem Vorratsbehälter 18 und spritzt den für die Verbrennung benötigten Kraftstoff in die Zylinder ein. Überschüssiger Kraftstoff wird über eine Rücklaufleitung 26 in den Vorratsbehälter 18 zurückgeführt. Für den Fall, dass die Druckpumpe 12 ungeregelt ist und mehr Kraftstoff als erforderlich in den Vorratsbehälter pumpt, ist noch eine Rücklaufleitung 30 in den Tank 10 vorhanden.

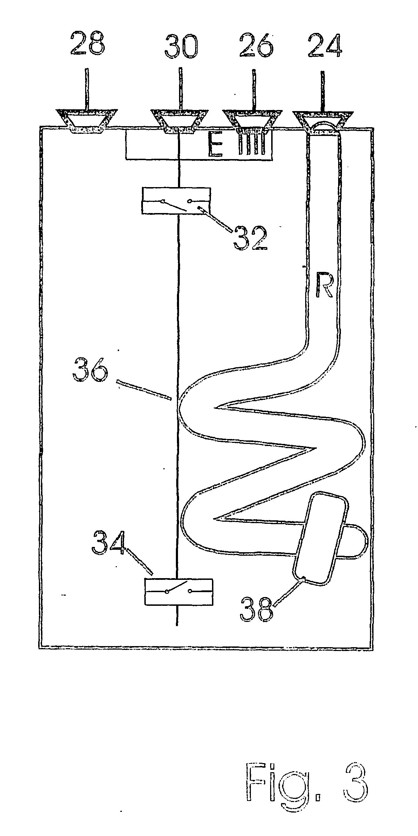

Fig. 3 zeigt als Detail aus Fig. 2 einen Vorratsbehälter 18. Der Vorratsbehälter 18 besitzt einen Einlauf 28 vom Kraftstofffilter 16, einen Rücklauf 30 zum Tank 10, einen Vorlauf 24 zur Einspritzpumpe 22 und einen Rücklauf 26 von der Einspritzpumpe 22.

Der Pegelstand im Vorratsbehälter wird von zwei Pegelschaltern 32, 34 überwacht. Ein Pegelschalter 32 für einen vorgegebenen Maximalpegel schaltet die Kraftstoffpumpe 12 aus, ein Pegelschalter 34 für einen vorgegebenen Minimalpegel schaltet die Kraftstoffpumpe 12 ein. Zur Sicherheit für den Fall, dass die Regelung des Pegelstandes im Vorratsbehälter 18 ausfallen sollte, ist der weitere Rücklauf 30 vom Vorratsbehälter 18 in den Tank 10 installiert. Dieser Rücklauf 30 dient auch zur Entlüftung.

Im Vorratsbehälter 18 ist ferner eine Ultraschallbehandlungsvorrichtung 20 angeordnet. Entsprechend einer in Versuchen erprobten Ausführung besteht die Ultraschallbehandlungsvorrichtung 20 aus einem spiralförmig gebogenen Metallröhrchen 36, das am unteren Ende durch eine Induktionsspule 38 zu Magnetostriktikonsschwingungen im Ultraschallbereich angeregt wird. Der Kraftstoffeinlauf 28 vom Kraftstofffilter 16 wird durch dieses Röhrchen 36 in den Vorratsbehälter 18 geleitet. Mit dieser Anordnung können starke Oberflächenbewegungen, die zu Lufteintrag führen hinreichend vermieden werden. Der Rücklauf 26 von der Einspritzpumpe 22 wird gleichzeitig genutzt, um die Elektronik zu kühlen, mit der über die Spule 38 die Magnetostriktions-Ultraschallschwingungen angeregt werden.

Eine nicht in der Zeichnung dargestellte induktive Impulsheizung der Einspritzdüsen, die elektronisch geregelt ist, ermöglicht den Startvorgang mit Pflanzenölen und unterstützt auch den Dauerbetrieb mit veränderten Betriebsdaten. Dabei erfolgt der Übergang von Startmodus zu einem evtl. unterstützenden Dauerbetriebsmodus automatisch durch eine elektronische Regelung

Bei Nutzung aller beschriebenen Maßnahmen sorgt die Vorrichtung für einen über den gesamten in Praxis auftretenden Temperatur und Viskositätsbereich hinreichend hohen Volumenstrom.

Bei EDC-gesteuerten Dieselmotoren ist noch eine in der Zeichnung nicht dargestellte Verstärkerelektronik zur Verstärkung und ggfs. Verzögerung von Nadelhubsensorsignalen vorgesehen.

Um das Signal des Nadelhubsensors bei elektronisch gesteuerten Einspritzpumpen auch bei niedrigen Drehzahlen auf einen für die EDC auswertbaren Pegel zu bringen, wird der EDC eine schnelle Verstärkerelektronik vorgeschaltet. Diese Elektronik gestattet es zusätzlich, das Signal des Nadelhubsensors im Millisekundenbereich zu verzögern, so dass eine Korrektur des Einspritzzeitpunktes ohne Eingriff in die EDC möglich ist. Eine solche Verzögerung kann sinnvoll sein, da sie eine Anpassung des Einspritzzeitpunktes an die Eigenschaften verschiedener Kraftstoffe ohne Eingriff in die EDC, also unter Nutzung der für Dieselkraftstoff optimierten in Eproms abgelegten Kennlinienfelder, ermöglicht. Diese Verzögerung kann automatisch geschehen, der dafür benötigte Regelparameter kann aus den physikalischen Daten des jeweils verwendeten Kraftstoffs oder der Kraftstoffmischung abgeleitet werden, z. B. mit Hilfe einer automatisierten Viskositätsmessung. Die Verstärkung des Signals sorgt für einen Signalpegel, der in jedem Drehzahlbereich bei jeder Arbeitsperiode der EDC ein auswertbares Signal liefert.

Nach dem beschrieben Verfahren und der Vorrichtung können praktisch alle in PKWs, Nutzfahrzeugen und als Standmotoren verwendeten Dieselmotoren auf den Betrieb mit Pflanzenölen umgerüstet werden. Mit umgerüsteten Motoren können Pflanzenöle oder Dieselkraftstoff rein oder in jedem beliebigen Mischungsverhältnis gefahren werden ohne irgendwelche Einstellungen beim Wechsel des Kraftstoffs vornehmen oder ändern zu müssen.

## Patentansprüche

1. Verfahren zum Betrieb eines Dieselmotors mit einem Kraftstoff, der Pflanzenöle oder recycelte Pflanzenöle umfasst, der aus einem Tank (10) entnommen, durch Kraftstofffilter gefiltert wird und mittels einer Einspritzpumpe (22) über Einspritzdüsen in die Zylinder eingespritzt wird, wobei überschüssiger Kraftstoff zurückgeführt wird, **dadurch gekennzeichnet, dass** der Kraftstoff vom Tank (10) mittels einer Druckpumpe (12) über als druckbeständige Faserfilter ausgebildete Kraftstofffilter (14, 16) in einen Vorratsbehälter (18) überführt wird, der Kraftstoff vor Eintritt in die Einspritzpumpe (22) im Vorratsbehälter (18) durch Ultraschall behandelt wird, von der Einspritzpumpe (22) aus dem Vorratsbehälter (18) angesaugt wird und überschüssiger Kraftstoff in den Vorratsbehälter (18) zurückgeführt wird.

2. Verfahren nach Anspruch 1, **dadurch gekennzeichnet, dass** der Kraftstoff durch Faserfilter aus Glasfasern und/oder Kunststofffasern gefiltert wird.

3. Verfahren nach Anspruch 1 oder 2, **dadurch gekennzeichnet, dass** ein Kraftstoffpegel im Vorratsbehälter (18) über eine Regelung der Druckpumpe (12) zwischen einem vorgegebenen Minimalpegel und Maximalpegel aufrechterhalten wird.

4. Verfahren nach Anspruch 3, **dadurch gekennzeichnet, dass** der Kraftstoff bei Erreichen eines vorgegebenen Grenzdruckes am Kraftstofffilter (16) durch ein Überdruckventil über einen Rücklauf in den Tank (10) geleitet wird.

5. Verfahren nach einem der Ansprüche 1 bis 4, **dadurch gekennzeichnet, dass** ein Additiv in den Vorratsbehälter (18) eingeleitet wird.

6. Verfahren nach einem der Ansprüche 1 bis 5, **dadurch gekennzeichnet, dass** die Einspritzdüsen und damit der Kraftstoff durch eine mit den Einspritzdüsen gekoppelte induktive Wirbelstromheizung vor und während des Starts des Dieselmotors beheizt werden.

7. Verfahren nach Anspruch 6, **dadurch gekennzeichnet, dass** die induktive Wirbelstromheizung pulsbreitengeregelt wird.

8. Verfahren nach einem der Ansprüche 1 bis 7, **dadurch gekennzeichnet, dass** bei elektronisch geregelten Einspritzsystemen das Signal eines zur Regelung des Einspritzzeitpunktes verwendeten Sensors, insbesondere eines Nadelhubsensors, durch eine schnelle Elektronik verstärkt und definiert verzögert and das elektronisch geregelte Einspritzsystem übermittelt wird.

9. Verfahren nach Anspruch 8, **dadurch gekennzeichnet, dass** die Elektronik ihre Stromversorgung aus dem Signal des Nadelhubsensors bezieht.

10. Vorrichtung zum Betrieb eines Dieselmotors mit einem Kraftstoff, der Pflanzenöle oder recycelte Pflanzenöle umfasst, mit einem Tank (10) für den Kraftstoff, Kraftstofffilter, einer Einspritzpumpe (22) und Einspritzdüsen zum Einspritzen des Kraftstoffes in die Zylinder, wobei überschüssiger Kraftstoff zurückführbar ist, **dadurch gekennzeichnet, dass** zusätzlich zum Tank (10) ein Vorratsbehälter (18) vorhanden ist, zwischen dem Tank (10) und dem Vorratsbehälter (18) eine Druckpumpe (12) und als druckbeständige Faserfilter ausgebildete Kraftstofffilter (14, 16) angeordnet sind, wobei mittels der Druckpumpe (12) über die Kraftstofffilter (14, 16) Kraftstoff aus dem Tank (10) in den Vorratsbehälter (18) überführbar ist, dass im Vorratsbehälter (18) eine Ultraschallbehandlungsvorrichtung (20) für den Kraftstoff angeordnet ist und dass von der Einspritzpumpe (22) aus dem Vorratsbehälter (18) Kraftstoff ansaugbar und überschüssiger Kraftstoff in den Vorratsbehälter (18) zurückführbar ist.

11. Vorrichtung nach Anspruch 10, **dadurch gekennzeichnet, dass** die Faserfilter aus Glasfasern und/oder Kunststofffasern besteht.

12. Vorrichtung nach Anspruch 10 oder 11, **dadurch gekennzeichnet, dass** die Druckpumpe (12) als Zahnradpumpe ausgebildet ist und durch einen elektronisch geregelten Elektromotor antreibbar ist.

13. Vorrichtung nach Anspruch 11 oder 12, **dadurch gekennzeichnet, dass** eine Regelung mit der Druckpumpe (12) verbunden ist, mittels der ein Kraftstoffpegel im Vorratsbehälter zwischen einem vorgegebenen Minimalpegel und Maximalpegel aufrechterhaltbar ist.

14. Vorrichtung nach einem der Ansprüche 10 bis 13, **dadurch gekennzeichnet, dass** zwischen der Druckpumpe (10) und dem Kraftstofffilter (16) ein Überdruckventil mit einem Rücklauf in den Tank (10) angeordnet ist, über den Kraftstoff bei Erreichen eines vorgegebenen Grenzdruckes am Kraftstofffilter (16) in den Tank (10) leitbar ist.

15. Vorrichtung nach einem der Ansprüche 10 bis 13, **dadurch gekennzeichnet, dass** eine Dosiervorrichtung für ein Additiv über eine Injektionsleitung mit dem Vorratsbehälter (18) verbunden ist, wobei mittels der Dosiervorrichtung ein Additiv in den Vorratsbehälter (18) einleitbar ist.

16. Vorrichtung nach einem der Ansprüche 10 bis 15, **dadurch gekennzeichnet, dass** die Ultraschallbehandlungsvorrichtung (20) einen induktiven, piezoelektrischen oder magnetostriktiven Ultraschallgeber (38) am oder im Gehäuse des Vorratsbehälters umfasst.

17. Vorrichtung nach einem der Ansprüche 10 bis 16, **dadurch gekennzeichnet, dass** die Einspritzdüsen induktiv beheizbar sind und die Heizung pulsbreitengeregelt ist.

18. Vorrichtung nach Anspruch 17, **dadurch gekennzeichnet, dass** die induktive Heizung der Einspritzdüsen um die Einspritzdüsen gelegte Spulen umfasst.

19. Vorrichtung nach Anspruch 18, **dadurch gekennzeichnet, dass**, die Spulen als bifilare Doppelspulen ausgebildet sind.

20. Vorrichtung nach einem der Ansprüche 10 bis 19, **dadurch gekennzeichnet, dass** bei elektronisch geregelten Einspritzsystemen das Signal eines zur Regelung des Einspritzzeitpunktes verwendeten Sensors, insbesondere eines Nadelhubsensors, durch eine schnelle Elektronik verstärkbar und definiert verzögerbar and das elektronisch geregelte Einspritzsystem übermittelbar ist.

## Claims

1. A method for operating a diesel engine with a fuel that comprises vegetable oils or recycled vegetable oils, wherein the fuel is withdrawn from a tank (10), filtered by means of fuel filters and injected into the cylinders through injection nozzles by means of an injection pump (22), and wherein excess fuel is returned, **characterized in that** the fuel is transferred from the tank (10) into a storage reservoir (18) by means of a forcing pump (12) that forces the fuel through fuel filters (14, 16) in the form of pressure-resistant fiber filters, and **in that** the fuel is treated by means of ultrasound in the storage reservoir (18) before it is introduced into the injection pump (22), wherein the injection pump (22) withdraws fuel by suction from the storage reservoir (18) and excess fuel is returned into the storage reservoir (18).

2. The method according to Claim 1, **characterized in that** the fuel is filtered by means of fiber filters consisting of glass fibers and/or plastic fibers.

3. The method according to Claim 1 or 2, **characterized in that** the fuel level in the storage reservoir (18) is maintained between a predetermined minimum level and maximum level by controlling the forcing pump (12).

4. The method according to Claim 3, **characterized in that** the fuel is conveyed into the tank (10) via a return line by means of a pressure relief valve once a predetermined limiting pressure on the fuel filter (16) is reached.

5. The method according to one of Claims 1-4, **characterized in that** an additive is introduced into the storage reservoir (18).

6. The method according to one of Claims 1-5, **characterized in that** the injection nozzles and consequently the fuel are heated before and during the start of the diesel engine by means of an inductive eddy current heating system.

7. The method according to Claim 6, **characterized in that** the inductive eddy current heating system is pulse-width control.

8. The method according to one of Claims 1-7, **characterized in that** the signal of a sensor used for controlling the injection time in electronically controlled injection systems, particularly a needle-lift sensor, is amplified by means of high-speed electronics and transmitted to the electronically controlled injection system with a defined delay.

9. The method according to Claim 8, **characterized in that** the power supply of the electronics is realized with the signal of the needle-lift sensor.

10. A device for operating a diesel engine with a fuel that comprises vegetable oils or recycled vegetable oils, with a tank (10) for the fuel, fuel filters, an injection pump (22) and injection nozzles for injecting the fuel into the cylinders, wherein excess fuel is returned, **characterized in that** a storage reservoir (18) is provided in addition to the tank (10), **in that** a forcing pump (12) and fuel filters (14, 16) in the form of pressure-resistant fiber filters are arranged between the tank (10) and the storage reservoir (18), wherein the fuel can be transferred from the tank (10) into the storage reservoir (18) by means of a forcing pump (12) that forces the fuel through the fuel filters (14, 16), **in that** an ultrasonic treatment device (20) for the fuel is arranged in the storage reservoir (18), and **in that** the injection pump (22) withdraws fuel by suction from the storage reservoir (18) and excess fuel is returned into the storage reservoir (18).

11. The device according to Claim 10, **characterized in that** the fiber filters consist of glass fibers and/or plastic fibers.

12. The device according to Claim 10 or 11, **characterized in that** the forcing pump (12) is realized in the form of a gear pump that can be driven by an electronically controlled electric motor.

13. The device according to Claim 11 or 12, **characterized in that** the forcing pump (12) is connected to a control that makes it possible to maintain the fuel level in the storage reservoir between a predetermined minimum level and maximum level.

14. The device according to one of Claims 10-13, **characterized in that** a pressure relief valve with a return line leading into the tank (10) is arranged between the forcing pump (10) and the fuel filter (16), wherein the fuel can be conveyed into the tank (10) by means of this pressure relief valve once a predetermined limiting pressure on the fuel filter (16) is reached.

15. The device according to one of Claims 10-13, **characterized in that** a metering device for an additive is connected to the storage reservoir (18) via an injection line, wherein an additive can be introduced into the storage reservoir (18) by means of the metering device.

16. The device according to one of Claims 10-15, **characterized in that** the ultrasonic treatment device (20) comprises an inductive, piezoelectric or magnetostrictive ultrasonic generator (38) that is arranged on or in the housing of the storage reservoir.

17. The device according to one of Claims 10-16, **characterized in that** the injection nozzles can be inductively heated, and **in that** the corresponding heater is pulse-width controlled.

18. The device according to Claim 17, **characterized in that** the inductive heater for the injection nozzles comprises coils that are placed around the injection nozzles.

19. The device according to Claim 18, **characterized in that** the coils are realized in the form of bifilar compound coils.

20. The device according to one of Claims 10-19, **characterized in that** the signal of a sensor used for controlling the injection time in electronically controlled injection systems, particularly a needle-lift sensor, can be amplified by means of high-speed electronics and transmitted to the electronically controlled injection system with a defined delay.

## Revendications

1. Procédé destiné au fonctionnement d'un moteur Diesel avec un carburant à base d'huiles végétales ou d'huiles végétales recyclées, carburant qui est prélevé dans un réservoir (10), filtré à travers des filtres de combustible et injecté dans les cylindres au moyen d'une pompe d'injection (22), via des injecteurs, l'excédent de carburant étant retourné, **caractérisé en ce que** le carburant est transféré du réservoir (10) à un réservoir de stockage (18) au moyen d'une pompe refoulante (12), via des filtres de combustible (14, 16) conçus comme filtres à matière fibreuse résistants à la pression, **en ce que** le carburant est traité aux ultrasons dans le réservoir de stockage (18), avant d'entrer dans la pompe d'injection (22), en qu'il est aspiré du réservoir de stockage (18) par la pompe d'injection et que l'excédent de carburant est retourné dans le réservoir de stockage (18).

2. Procédé suivant la revendication 1, **caractérisé en ce que** le carburant est filtré à travers des filtres à matière fibreuse en fibres de verre et/ou en fibres de matière artificielle.

3. Procédé suivant la revendication 1 ou 2, **caractérisé en ce qu'**un niveau de carburant est maintenu entre un niveau minimum et un niveau maximum prédéterminés dans le réservoir de stockage (18) par l'intermédiaire d'un réglage de la pompe refoulante (12).

4. Procédé suivant la revendication 3, **caractérisé en ce que** le carburant est conduit dans le réservoir (10), à travers une soupape de surpression, via un retour, lorsqu'une pression limite prédéterminée est atteinte au filtre de combustible (16).

5. Procédé suivant une des revendications 1 à 4, **caractérisé en ce qu'**un additif est introduit dans le réservoir de stockage (18).

6. Procédé suivant une des revendications 1 à 5, **caractérisé en ce que** les injecteurs et, par conséquent, le carburant sont réchauffés par un chauffage à courant de Foucault inductif avant et pendant le démarrage du moteur Diesel.

7. Procédé suivant la revendication 6, **caractérisé en ce que** le chauffage à courants de Foucault inductif fait l'objet d'un réglage par impulsions de largeur.

8. Procédé suivant une des revendications 1 à 7, **caractérisé en ce que**, dans le contexte de systèmes à injection à réglage électronique, le signal d'un détecteur utilisé pour le réglage d'un moment d'injection, en particulier d'un détecteur de la levée du téton, est transmis, renforcé par une électronique rapide et retardé de manière définie, au système d'injection à réglage électronique.

9. Procédé suivant la revendication 8, **caractérisé en ce que** l'électronique est alimentée en courant à partir du signal du détecteur de la levée du téton.

10. Dispositif destiné au fonctionnement d'un moteur Diesel avec un carburant à base d'huiles végétales ou d'huiles végétales recyclées, avec un réservoir (10) pour le carburant, un filtre de combustible, une pompe d'injection (22) et des injecteurs servant à injecter le carburant dans les cylindres, l'excédent de carburant pouvant être retourné, **caractérisé en ce qu'**en plus du réservoir (10), il existe un réservoir de stockage (18), **en ce qu'**une pompe refoulante (12) et des filtres de combustible conçus comme filtres à masse fibreuse (14, 16) résistants à la pression sont disposés entre le réservoir (10) et le réservoir de stockage (18), **en ce qu'**il est possible de transférer du carburant du réservoir (10) au réservoir de stockage (18) au moyen de la pompe refoulante (12), **en ce qu'**un dispositif de traitement aux ultrasons (20) du carburant est disposé dans le réservoir de stockage (18) et **en ce que** la pompe d'injection (22) peut aspirer du carburant dans le réservoir de stockage (18) et retourner les excédents de carburant dans le réservoir de stockage (18).

11. Dispositif suivant la revendication 10, **caractérisé en ce que** les filtres de matière fibreuse sont en fibres de verre et/ou en fibres de matière artificielle.

12. Dispositif suivant le revendication 10 ou 11, **caractérisé en ce que** la pompe refoulante (12) est conçue comme pompe à engrenages et **en ce qu'**elle peut être actionnée par un moteur électrique à réglage électronique.

13. Dispositif suivant la revendication 11 ou 12, **caractérisé en ce qu'**un réglage, au moyen duquel le niveau de carburant peut être maintenu dans le réservoir de stockage entre un niveau minimum et un niveau maximum prédéterminés, est relié à la pompe refoulante (12).

14. Dispositif suivant une des revendications 10 à 13, **caractérisé en ce qu'**une soupape de surpression avec un retour dans le réservoir (10) est disposée entre la pompe refoulante (10) et le filtre de combustible (16), soupape via laquelle du carburant peut être conduit dans le réservoir (10), lorsqu'une pression limite déterminée est atteinte au filtre de combustible (16).

15. Dispositif suivant une des revendications 10 à 13, **caractérisé en ce qu'**un dispositif de dosage pour un additif est relié au réservoir de stockage (18) via une conduite d'injection, le dispositif de dosage permettant d'introduire un additif dans le réservoir de stockage (18).

16. Dispositif suivant une des revendications 10 à 15, **caractérisé en ce que** le dispositif de traitement aux ultrasons comprend, sur ou dans le corps du réservoir de stockage, un générateur d'ultrasons inductif, piézoélectrique ou magnétostriction.

17. Dispositif suivant une des revendications 10 à 16, **caractérisé en ce que** les injecteurs peuvent être chauffés par induction et **en ce que** le chauffage fait objet d'une régulation par impulsions de largeur.

18. Dispositif suivant la revendication 17, **caractérisé en ce que** le chauffage inductif des injecteurs comprend des bobines posées autour des injecteurs.

19. Dispositif suivant la revendication 18, **caractérisé en ce que** les bobines sont conçues comme bobines doubles bifilaires.

20. Dispositif suivant une des revendications 10 à 19, **caractérisé en ce que**, dans le contexte de systèmes d'injection à réglage électronique, le signal d'un détecteur, en particulier d'un détecteur de levée du téton, utilisé pour le réglage du moment d'injection, peut, renforcé par une électronique rapide et retardé de manière définie, être transmis au système d'injection à réglage électronique.
